# EUROPEAN PATENT APPLICATION

(11) **EP 2 181 829 A1**
(43) Date of publication of application: **05.05.2010**
(21) Application number: 09174443.3
(22) Date of filing: 29.10.2009
(51) Int. Cl.: B29C 45/14, H05K 5/00

(54) **Shell for electronic device, and electronic device having the same**

(30) Priority: 31.10.2008 CN 200820213213 U
(71) Applicant: BYD Company Limited, Shenzhen 518118 (CN)
(72) Inventor: Sun, Ligang, 518118, Shenzhen (CN); Chen, Chuimin, 518118, Shenzhen (CN); Deng, Taoyong, 518118, Shenzhen (CN); Chang, Mingzhu, 518118, Shenzhen (CN); Zhang, Jiaxin, 518118, Shenzhen (CN)
(74) Representative: Rasch, Dorit

(57) **Abstract**

The present invention discloses a shell for an electronic device comprising a shell body (1); a decoration layer (2) on the shell body (1); an accommodating chamber (21) formed in the decoration layer (2); and an insert (4) in the accommodating chamber (21). According to the present invention, the shell is decorated by the decoration layer (2) and the insert (4), then the stability of decoration of the electronic device is improved and the aesthetic effect of the decoration layer (2) is not affected, the product meets the individual requirements of different consumers.

## Description

### CROSS REFERENCES TO RELATED APPLICATIONS

The present application claims a priority to a Chinese patent application No. 200820213213.2, filed on October 31, 2008, the entirety of which is hereby incorporated by reference.

### FIELD OF THE INVENTION

The present invention generally relates to a shell for electronic device, especially relates to a shell with decoration layers for electronic device.

### BACKGROUND

In the present market, shells for electronic device are decorated by leather or other materials to develop a visual effect and a pleasant touching feeling and to improve the additional value of the electronic device. However, the decorative effect of the prior art is too simple to meet the needs of individual requirements of different consumers. Patterns are printed on a decoration layer by transfer printing in the prior art, and the patterns printed by transfer printing are easy to be worn out and fade. Furthermore, it is difficult to permanently fix necessary parts (such as logo and so on) on this kind of shells for electronic device.

### SUMMARY OF THE INVENTION

In view thereof, the present invention is directed to solve at least one of the problems existing in the prior art. Accordingly, a shell for an electronic device is needed to meet individual requirements of different consumers. Furthermore, an electronic device comprising the same are also needed for individual purpose.

In one aspect, a shell for an electronic device is provided, comprising: a shell body, a decoration layer on the shell body, accommodating chambers formed on the upper surface of the decoration layer, an insert in the accommodating chamber.

Preferably, the decoration layer is formed of leather.

The shell may further comprise a support layer located under the parts of the decoration layer except the accommodating chamber part, wherein the support layer is preferably a soft support layer.

Furthermore, there is a convexity placed on parts of the shell body under the inserts, the insert may cover the convexity completely, and the cross section area of the insert is preferably larger than the surface area of the convexity. Preferably, the lateral dimensions of the convexity range from 4mm to 8mm, more preferably from 5mm to 7mm. Preferably, the thickness of the insert ranges from 0.1 mm to 0.5 mm, more preferably from 0.2mm to 0.4mm. Preferably, the lateral dimensions of the insert range from 5mm to 15 mm, more preferably from 8mm to 12mm. Preferably, the depth of the accommodating chamber corresponds to the thickness of the insert and/or the bottom surface of the accommodating chamber is slightly larger than the surface area of the insert.

In another aspect, an electronic device is provided, comprising a body and a shell as described above configured to matchthe body.

According to the present invention, the insert is set on the shell with decoration layer by studding, which further improves the decorative effect of the electronic device and doesn't affect the aesthetic effect of the decoration layer.

### BRIEF DESCRIPTION OF THE FIGURES

These and other aspects and advantages of the invention will become apparent and more readily appreciated from the following descriptions taken in conjunction with the drawings in which:

Fig.1 is a longitudinal section schematic diagram of the mold used in the present invention.

Fig.2-Fig.5 are schematic diagrams of the making process of the mold in the present invention.

Fig.6A and Fig.6B are schematic diagrams showing the match between the convexity and the insert of the mold in the present invention.

### REFERENCE SIGN LIST

The illustrations of the reference signs in the diagrams are as follows:
1- shell body
2- decoration layer
21- accommodating chamber
3- support layer
4- insert
5- hard-sheet layer
6- convexity
61- antiskid

### DETAILED DESCRIPTION OF THE INVENTION

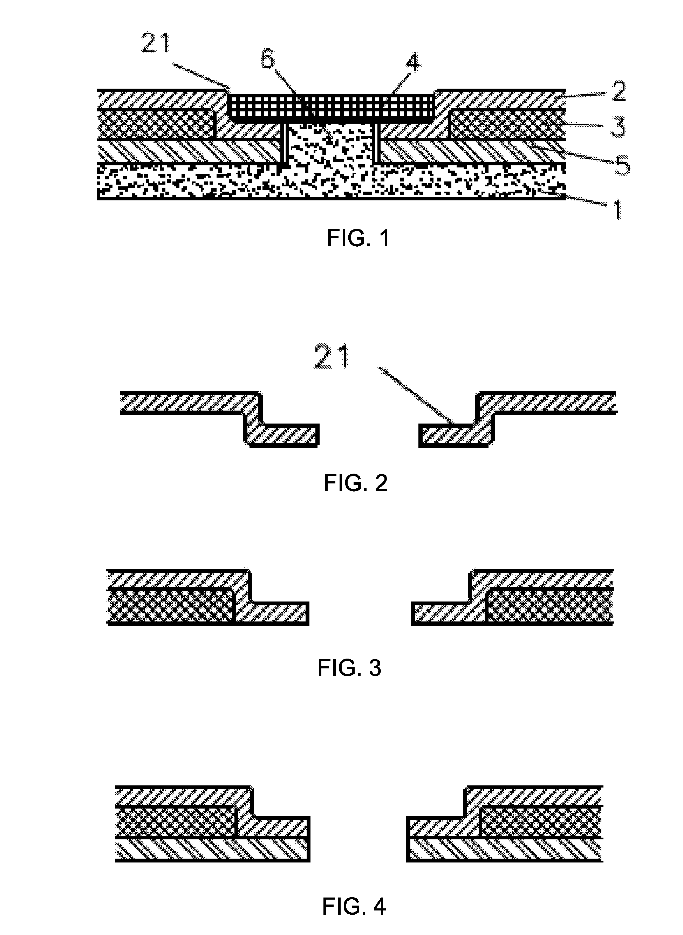

According to the present invention, a shell for an electronic device is provided. As shown in Fig.1, the shell comprises a shell body 1, a decoration layer 2 on the shell body, an accommodating chamber 21 formed on the upper surface of the decoration layer, and an insert 4 in the accommodating chamber.

The shell body can be made from a substrate of various materials, such as plastic materials selected from the group comprising polyester, polycarbonate (PC), acrylonitrile-butamoldne-styrene (ABS), polymethyl methacrylate (PMMA) and any combination thereof.

The shell body 1 can be manufactured by various methods, such as cutting existing plastic substrates and injection molding directly. The molding method is well known in this art.

The decoration layer 2 can be made from various materials, preferably the material has a certain toughness, such as stainless steel, bamboo sheet, leather and so on. In the present invention, leather is more preferable, such as dermal leather, polymer leather (such as polyurethane leather, polyvinyl chloride leather and so on) and so on. The shape of the accommodating chamber 21 opening matches the insert 4 well, the depth of the accommodating chamber 2 can be near or the same as the height of the insert 4, and there is no limit about the depth, according to the requirement about the effect of the electronic device, the upper surface of the insert can be higher or lower than the superior border of the accommodating chamber 21.

The accommodating chamber 21 can be formed by hot pressing leather, the method for hot pressing is well known in the art.

In order to support the decoration layer 2, a support layer 3 is set under the parts of the decoration layer 2 except the accommodating chamber part, preferably, the support layer 3 is a soft support layer, and the material of the support layer 3 is preferably foam. The support layer 3 can improve the visual effect and the touching feeling of the decoration layer 2.

Because the materials of the decoration layer 2 and the support layer 3 are soft and easy to distort, a hard-sheet layer 5 is set under the bottom of the support layer 3 to finalize the layers, then the lamination of leather, foam and hard sheet can keep their shape. The hard sheet layer 5 can comprise various plastic materials sheets usually used in manufacturing electronic devices, metal, ceramic materials and so on. In order to combine the layers with the shell body 1 more firmly, some adhesive can be set between the decoration layer 2 and the support layer 3, between the support layer 3 and the hard sheet layer 5, and between the hard sheet layer 5 and the surface of the shell body 1. Said adhesive can comprise various glues, preferably, it can be hot melt adhesive. Said hot melt adhesive is solid in room temperature and changes to liquid which can flow and has a certain viscidity when heated to a certain temperature.

Preferably, the amount of hardness of the hard sheet layer 5 (measured on the Mohs scale) is greater than the amount of hardness of the soft support layer 3 and/or the decoration layer 2, more preferably the amount of hardness of the hard sheet layer 5 (measured on the Mohs scale) is at least two times greater than the amount of hardness of the soft support layer 3 and/or the decoration layer 2, and still more preferably the amount of hardness of the hard sheet layer 5 (measured on the Mohs scale) is at least five times greater than the amount of hardness of the soft support layer 3 and/or the decoration layer 2.

The insert 4 can comprise various decorations with decorative effect, such as metal decoration, glass decoration, logo of products and so on. The shape of the insert 4 is limitless, according to the present invention, in the field of manufacturing the electronic device, regular geometric shapes are elected to meet the appearance quality requirement of the electronic device, preferably, the shapes having smooth sideline are elected, such as column, truncated cone, elliptical cylinder, truncated elliptical cone and so on. Of course, square cylinder and other irregular geometric shapes can also meet the requirements of the present invention.

According to one embodiment of the present invention, as shown in Fig.1, a convexity 6 is formed on the shell body 1 under the insert 4 to firmly attach the insert 4 in the accommodating chamber 21 of the decoration layer 2, the insert 4 covers the convexity 6 completely, and the cross section area of the insert 4 is larger than the surface area of the convexity 6. Preferably, convexity 6 and insert 4 are bonded together with a hot melt adhesive.

The convexity 6 is molded together with the shell body 1, and the shape of the convexity 6 is limitless, and can be various regular or irregular columns, preferably, a regular column is selected, such as circular column, truncated cone, square cylinder, trapeziform column and so on. The thickness of the convexity 6 is determined according to the height of the upper surface of the decoration layer 2 and the insert 4, and the appearance setting of the products. Preferably, the convexity 6 is lower than the upper surface of the decoration layer 2 and no lower than the bottom of the accommodating chamber 21.

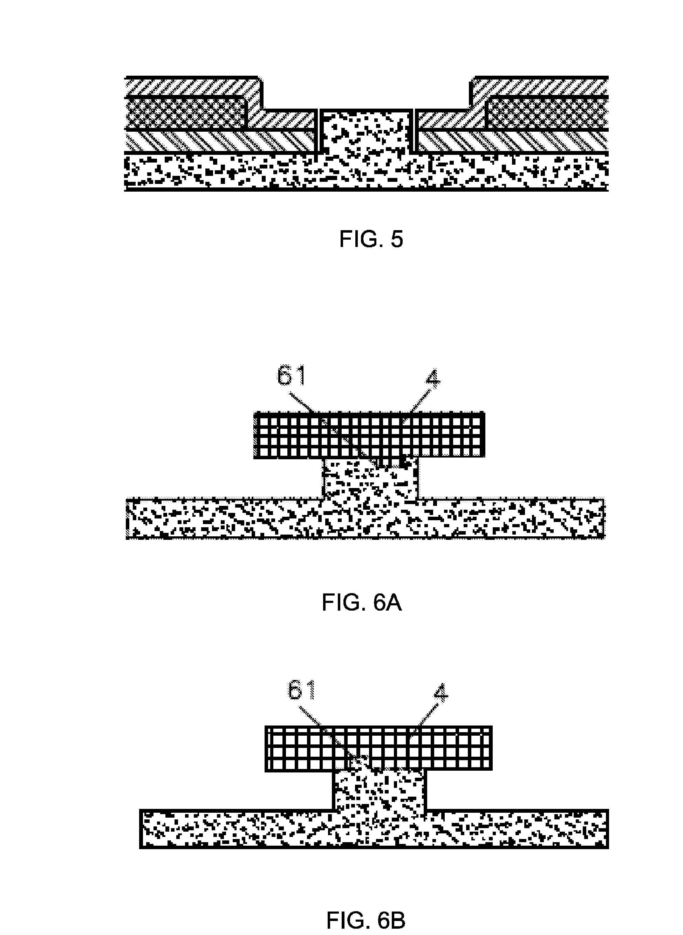

According to the present invention, the surface of the convexity 6 has certain roughness to prevent gliding between the convexity 6 and the insert 4. Preferably, the insert 4 has convex or concave parts at the bottom, and an antiskid part 61 matching the convex or concave parts of the insert 4 is formed on the convexity 6, so that the surfaces of the insert 4 and the convexity 6 can engage well, as shown in Fig.6A and Fig.6B and the stability of the decoration is improved with respect to the prior art. Also, in the present invention the decoration or logo is not directly printed on the decoration layer 2, but on the insert 4, thereby enabling the realization of a greater variety of designs and decorative patterns.

Hereinafter, the method of manufacturing the electronic device shell with logo according to one embodiment of the present invention is illustrated in detail.

Said logo is a cylinder, the surface diameter of the logo is about 10mm, and the thickness of the logo is about 0.3mm.

A mould is designed according to the structure of the shell body 1 and the convexity 6 on the shell, and then a shell body 1 with convexity 6 is molded. Said convexity is a cylinder with a surface diameter of about 6mm and a height of about 1.0mm.

A shape fitting the logo is pressed in the leather to form a circular accommodating chamber 21, and a via hole at the bottom of the accommodating chamber 21 is punched at the same time, as shown in Fig.2. The height of the accommodating chamber 21 is about 0,3mm, and the bottom surface diameter of the accommodating chamber is about 10.5mm. Said via hole is used to seize the convexity 6, and the aperture of the via hole is slightly larger than the surface radius of the convexity 6. According to the embodiment in the present invention, the aperture of the via hole is about 7mm. The methods of hot pressing and punching are well known in this field.

The bottom surface of the decoration layer 2 is coated with hot melt adhesive, then, the non-depression part of the decoration layer 2 is filled with foam, and the decoration layer 2 combines with the foam tightly. The thickness of the foam is about 0,3mm in normal situation. The obtained product is shown in Fig.3.

A via hole corresponding to the via hole in the decoration layer 2 is formed in a rigid gum sheet to obtain a hard sheet layer 5. The hard sheet layer is adhered to the bottom of the foam 3, and the via hole in the hard sheet layer 5 corresponds to the via hole in the decoration layer 2. The obtained product is shown in Fig.4.

The product obtained above is placed on the convexity 6, and glue is put between the hard sheet layer 5 and the shell body 1, whereon the hard sheet layer 5 and the shell body 1 adhere to each other tightly to obtain the product as shown in Fig.5. According to one embodiment of the present invention, the surface of the convexity 6 and the concave portion of the decoration layer 2 are on the same plane, however, the condition that the surface of the convexity 6 is slightly higher than the concave portion of the decoration layer 2 is also suitable for the present invention.

Finally, the logo is deposited in the accommodating chamber 21 of the decoration layer 2 and adhered on the convexity 6 to obtain the product according to one embodiment of the present invention.

According to the present invention, an electronic device is provided, and the electronic device comprises a body and a shell configured to match the body, wherein the shell thereof is prepared according to the present invention.

The body comprises all kinds of elements in the electronic device shell which can realize the functions of the electronic device, and the sorts, combination and connection relation of the elements are widely known in this field, which is hereby omitted for clarity purpose.

There is no limitation to the electronic device in the present invention, such as a mobile phone, a MP3, a PDA, a notebook computer and a digital camera and so on, wherein a mobile phone is preferable.

One advantage of the present invention consists in providing a compound decoration layer comprising a leather layer (made of dermal leather, polymer leather, or similar) a soft-enhance layer and a hard sheet layer, wherein the soft part of the compound decoration layer can be designed freely. Another advantage of the present invention is that various kinds of logo with different materials and shapes can be assembled on the decoration layer seamlessly and the assembly method is reliable and stable.

In the sense of the present invention, the support layer 3 is not a component of the shell 1 but a component of the decoration compound preferably including the decoration layer 2, the support layer 3 and the hard sheet layer 5. In fact, the support layer 3 is a soft-add-layer in order to adjust the softness of the decoration layer 2, and the support layer 3 with soft material is preferably bonded or cushioned under the decoration layer 2 to add softness to the combined decoration layer 2/ support layer 3 . Moreover, the hard sheet layer 5 is essentially a supporting layer, since the both the decoration layer 2 and the support layer 3 are soft, and the hard sheet layer 5 is made by hard materials such as PC sheet, metal sheet and so on, in order to support both the upper soft layers 2, 3, and therefore the decoration compound can be assembled on the shell 1 easier, wherein, the shell surface directly contacts the hard sheet layer 5.

## Claims

1. A shell for an electronic device, comprising:
a shell body (1);
a decoration layer (2) on the shell body (1);
an accommodating chamber (21) formed in the upper surface of the decoration layer (2);
an insert (4) in the accommodating chamber (21); and
a convexity (6) located on the shell body (1) under the insert (1).

2. The shell according to claim 1, wherein, the decoration layer (2) is a leather layer.

3. The shell according to one of the preceding claims, wherein the shell further comprises a support layer (3) located under the parts of the decoration layer (2) except the parts corresponding to the accommodating chamber (21).

4. The shell according to claim 3, wherein the support layer (3) is a soft support layer.

5. The shell according to one of claims 3-4, wherein the shell further comprises a hard sheet layer (5) under the support layer (3).

6. The shell according to one of the preceding claims,
wherein the insert (1) is covering the convexity (6), and
wherein the cross section area of the insert (6) is larger than the surface area of the convexity (6).

7. The shell according to claim 6, wherein the surface of the convexity (6) is lower than the superior border of the accommodating chamber (21) and higher than the bottom of the accommodating chamber (21).

8. The shell according to one of claims 6-7, wherein an antiskid part (61) is formed on the convexity (6) and the shape of the lower surface of the insert (4) is matching the antiskid part (61).

9. An electronic device, comprising a body and a shell according to any one of claims 1-8, wherein the shell is configured to match the body.

10. A method of manufacturing a shell for an electronic device, the method comprising the steps of:
- forming a shell body (1) with a convexity (6) formed on the upper surface of the shell body (1);
- pressing a shape onto a decoration layer (2) to form an accommodating chamber (21) on the upper surface of the decoration layer (2);
- punching a via hole in the decoration layer (2) at the bottom of the accommodating chamber (21);
- seizing the convexity (6) through the via hole; and
- placing an insert (4) in the accommodating chamber (21) and adhering the insert (4) to the convexity (6).

## Amended claims

### Amended claims in accordance with Rule 137(2) EPC.

**1.** A shell for an electronic device, comprising:
a shell body (1);
a decoration layer (2) on the shell body (1);
an accommodating chamber (21) formed in the upper surface of the decoration layer (2);
an insert (4) in the accommodating chamber (21); and
**characterized in that**
the shell body (1) comprises a protrusion (6) located under the insert (4) and adhered to the insert (4).

**2.** The shell according to claim 1, wherein, the decoration layer (2) is a leather layer.

**3.** The shell according to one of the preceding claims, wherein the shell further comprises a support layer (3) located under the parts of the decoration layer (2) except the parts corresponding to the accommodating chamber (21).

**4.** The shell according to claim 3, wherein the support layer (3) is a soft support layer.

**5.** The shell according to one of claims 3-4, wherein the shell further comprises a hard sheet layer (5) under the support layer (3).

**6.** The shell according to one of the preceding claims,
wherein the insert (4) is covering the protrusion (6), and
wherein the cross section area of the insert (4) is larger than the surface area of the protrusion (6).

**7.** The shell according to claim 6, wherein the surface of the protrusion (6) is lower than the superior border of the accommodating chamber (21) and higher than the bottom of the accommodating chamber (21).

**8.** The shell according to one of claims 6-7, wherein an antiskid part (61) is formed on the protrusion (6) and the shape of the lower surface of the insert (4) is matching the antiskid part (61).

**9.** An electronic device, comprising a body and a shell according to any one of claims 1-8, wherein the shell is configured to match the body.

**10.** A method of manufacturing a shell for an electronic device, the method comprising the steps of:
- forming a shell body (1) with a protrusion (6) formed on the upper surface of the shell body (1);
- pressing a shape onto a decoration layer (2) to form an accommodating chamber (21) on the upper surface of the decoration layer (2);
- punching a via hole in the decoration layer (2) at the bottom of the accommodating chamber (21);
- seizing the protrusion (6) through the via hole; and
- placing an insert (4) in the accommodating chamber (21) and adhering the insert (4) to the protrusion (6).
